# EUROPEAN PATENT APPLICATION

(11) **EP 4 489 249 A2**
(43) Date of publication of application: **08.01.2025**
(21) Application number: 24184239.2
(22) Date of filing: 25.06.2024
(51) Int. Cl.: H02J 3/32, H02J 3/38

(54) **CONTROL METHOD, CONTROL SYSTEM, AND CONTROL PROGRAM**

(30) Priority: 05.07.2023 JP 2023110831
(71) Applicant: Yokogawa Electric Corporation, Tokyo 180-8750 (JP); Yokogawa Solution Service Corporation, Musashino-shi, Tokyo 180-8750 (JP)
(72) Inventor: KOYAMA, Kazuki, Musashino-shi, Tokyo, 180-8750 (JP); MATSUSHITA, Takeshi, Musashino-shi, Tokyo, 180-8750 (JP); KAZUMI, Masahiro, Musashino-shi, Tokyo, 180-8750 (JP); OOTSU, Kazuki, Musashino-shi, Tokyo, 180-8750 (JP); UEMOTO, Tatsuya, Musashino-shi, Tokyo, 180-8750 (JP)
(74) Representative: Winter, Brandl - Partnerschaft mbB

(57) **Abstract**

A control method indluces: generating an initial planned value of a supplied energy (P1) to a power grid in each of a plurality of time slots (T); controlling power supply to the power grid (G) using generated power of a power generator (2) and charge-and-discharge power of an electric storage system (3) such that an actual value of the supplied energy (P1) to the power grid (G) is made close to a planned value in a time slot (T) after determination of the planned value; and changing the planned value in the time slot (T) before determination of the planned value such that an integrated charge-and-discharge energy (Pa) of the electric storage system (3) is made close to zero, wherein the controlling includes controlling the power supply to the power grid (G) such that the actual value of the supplied energy (P1) is made close to the changed planned value.

## Description

### BACKGROUND OF THE INVENTION

### 1. Field of the Invention

The present disclosure relates to a control method, a control system, and a control program.

### 2. Description of the Related Art

For example, as known in Japanese Laid-open Patent Publication No. 2020-28146, when a power retailer, or the like, submits power to an electric power grid, a planned value of supplied power is provided to a power transmission and distribution operator previously. When an imbalance in which an actual value of the supplied power to the power grid deviates from the planned value, a payment for adjustment for the imbalance is required in some cases.

In order to inhibit an imbalance, power supply according to the planned value using charge and discharge of the electric storage system is assumed. Using an electric storage system whose electric storage capacity is large increases the cost.

One aspect of the disclosure is reducing the electric storage capacity while inhibiting an imbalance.

A control method according to one aspect of the present disclosure includes: generating an initial planned value of a supplied energy to a power grid in each of a plurality of time slots; controlling power supply to the power grid using generated power of a power generator and charge-and-discharge power of an electric storage system such that an actual value of the supplied energy to the power grid is made close to a planned value in a time slot after determination of the planned value; and changing the planned value in the time slot before determination of the planned value such that an integrated charge-and-discharge energy of the electric storage system is made close to zero, wherein the controlling includes controlling the power supply to the power grid such that the actual value of the supplied energy is made close to the changed planned value.

A control system according to one aspect of the present disclosure incudes: a generator that generates an initial planned value of a supplied energy to a power grid in each of a plurality of time slots; a controller that controls power supply to the power grid using generated power of a power generator and charge-and-discharge power of an electric storage system such that an actual value of the supplied energy to the power grid is made close to a planned value in a time slot after determination of the planned value; and a change unit that changes the planned value in the time slot before determination of the planned value such that an integrated charge-and-discharge energy of the electric storage system is made close to zero, wherein the controlling by controller includes controlling the power supply to the power grid such that the actual value of the supplied energy is made close to the changed planned value.

A control program according to one aspect of the present disclosure causes a computer to execute a process including: generating an initial planned value of a supplied power energy to a power grid in each of a plurality of time slots; controlling power supply to the power grid using generated power of a power generator and charge-and-discharge power of an electric storage system such that an actual value of the supplied energy to the power grid is made close to a planned value in a time slot after determination of the planned value; and changing the planned value in the time slot before determination of the planned value such that an integrated charge-and-discharge energy of the electric storage system is made close to zero, wherein the controlling includes controlling the power supply to the power grid such that the actual value of the supplied energy is made close to the changed planned value.

### SUMMARY OF THE INVENTION

### BRIEF DESCRIPTION OF THE DRAWINGS

FIG. 1 is a diagram illustrating an example of a schematic configuration of a control system 1 according to an embodiment;
FIG. 2 is a diagram illustrating an example of a power conversion device 4;
FIG. 3 is a diagram illustrating an example of initial planned values;
FIG. 4 is a diagram illustrating an example of prediction results;
FIG. 5 is a diagram illustrating an example of absorption of variation in a generated energy P2 by an electric storage system 3;
FIG. 6 is a diagram illustrating an example of absorption of variation in the generated energy P2 by the electric storage system 3;
FIG. 7 is a diagram illustrating an example of a relationship between an integrated charge-and-discharge energy Pa of the electric storage system 3 and a necessary electric storage capacity;
FIG. 8 is a diagram illustrating an example of a change of a planned value and power control in a time slot T;
FIG. 9 is a diagram illustrating an example of a change of a planned value and power control in a time slot T;
FIG. 10 is a diagram illustrating an example of a change of a planned value and power control in the time slot T;
FIG. 11 is a diagram illustrating an example of a process (control method) that is executed in the control system 1; and
FIG. 12 is a diagram illustrating an example of a hardware configuration of a device.

### DETAILED DESCRIPTION OF THE PREFERRED EMBODIMENTS

With reference to the accompanying drawings, an embodiment will be described below. The same components are denoted with the same reference numbers and redundant description will be omitted as appropriate.

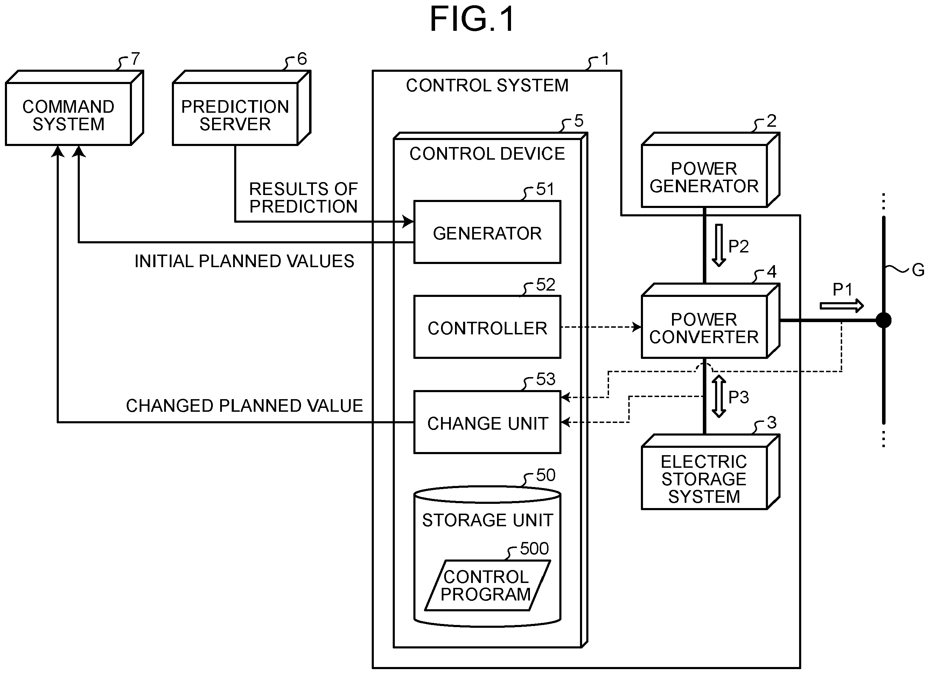

FIG. 1 is a diagram illustrating an example of a schematic configuration of a control system 1 according to the embodiment. The control system 1 is connected to a power generator 2 and a power grid G and can communicate with some external devices and an external system. A prediction server 6 and a command system 7 are exemplified as the external device and the external system.

The power grid G is a commercial power grid (can also be referred to as a power line, or the like) that a power transmission and distribution operator manages. Although not represented in FIG. 1, in addition to the power control system 1, power generation facilities that supply power to the power grid G, demanding houses and facilities that consume power from the power grid G, etc., are connected to the power grid G. At least part of the power generation facilities is managed and controlled by the power transmission and distribution operator. For example, the power transmission and distribution operator adjusts the generated power of the power generation facilities in order to balance the power demand and supply of the power grid G.

The control system 1 supplies power to the power grid G or loads power from the power grid G. In the embodiment, particularly, the control system 1 supplies power to the power grid G. The power supplied by the control system 1 to the power grid G may be an alternating current power. The power energy is referred to as a supplied energy P1 and illustrated in the drawing.

The control system 1 is connected between the power generator 2 and the power grid G and includes an electric storage system 3, a power converter 4, and a control device 5. The power generator 2 may be included in the control system as an element the control system 1.

The power generator 2 is connected to the electric storage system 3 and the power grid G via the power converter 4. Power generation by the power generator 2 includes power generation using natural energy (also referred to as renewable energy). Examples of the natural energy are wind energy and solar energy. In that case, the power generator 2 may be a wind power generator, a solar power generator, or the like. The generated power of the power generator 2 may be a direct current power or an alternating current power. The energy of the power is referred to as a generated energy P2 and illustrated in the drawing.

The electric storage system 3 is connected to the power generator 2 and the power network G via the power converter 4. The electric storage system 3 is charged with at least part of the generated power of the power generator 2 and discharges the stored power. The electric storage system 3, for example, may be configured by including a battery. In this case, the charge-and-discharge power of the battery serves as the charge-and-discharge power of the electric storage system 3. Not limited to the battery, the electric storage system 3 may be built using various techniques that make it possible to store the power. For example, a fuel cell may be used and, in that case, power is stored as hydrogen. The charge-and-discharge power of the electric storage system 3 may be a direct-current power. The power energy of the charge and discharge power is referred to as a charge-and-discharge energy P3 and is illustrated in the drawing. Except for the case where there is particular description, a discharge power energy of the charge-and-discharge energy P3 is presented by a positive value and the charge power energy is presented by a negative value.

Information on the charge and discharge by the electric storage system 3 is grasped (monitored) by a change unit 53 of the control device 5 to be described below.

The power converter 4 is connected between the power grid G, the power generator 2, and the electric storage system 3. The power converter 4 performs various types of power conversion. The power conversion by the power converter 4 can include increasing or decreasing the voltage of the direct-current power, converting a direct-current power to an alternating-current power, converting an alternating-current power to a direct-current power. The power converter 4 is also referred to as a PCS (Power Conditioning System or Power Converter), or the like. For easy understanding, assume that there is no loss due to power conversion by the power converter 4.

The power converter 4 supplies power to the power grid G using the generated power of the power generator 2 and the charge-and-discharge power of the electric storage system 3. Specifically, the power converter 4 converts the generated power of the power generator 2 into a power suitable for being supplied to the power grid G and supplies the power to the power grid G. The power converter 4 converts the discharge power of the electric storage system 3 into power suitable for being supplied to the power grid G and supplies the power to the power grid G. The power converter 4 converts the generated power of the power generator 2 into power suitable for charging the electric storage system 3 and charges the electric storage system 3 with the power.

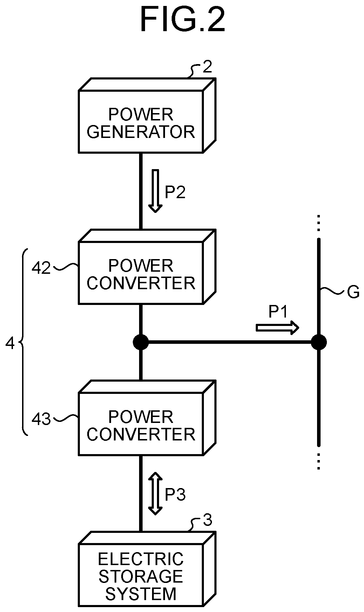

In one embodiment, the power converter 4 may be configured by including a plurality of power converters. The power converter 4 will be described with reference to FIG. 2.

FIG. 2 is a diagram illustrating an example of the power converter 4. In the example, the power converter 4 includes a power converter 42 and a power converter 43. The power converter 42 is connected between the power generator 2, the power converter 43, and the power grid G. The power converter 42 supplies the generated power of the power generator 2 to the power grid G or supplies the generated power to the power converter 43. The power converter 43 is connected between the electric storage system 3, the power converter 42, and the power grid G. The power converter 42 supplies the power generated by the power generator 2 to the power grid G and supplies the generated power to the power converter 43. The power converter 43 is connected between the electric storage system 3, the power converter 42, and the power grid G. The power converter 43 charges the electric storage system 3 with the power (the generated power of the power generator 2) from the power converter 42 and supplies the discharge power of the electric storage system 3 to the power grid G.

The configuration of the power converter 4 illustrated in FIG. 2 is an example only. Various configurations enabling realization of operations required for the power converter 4 in the control system 1 may be employed.

Back to FIG. 1, the sum of the generated power of the power generator 2 and the charge-and-discharge power of the electric storage system 3 serves as a power supplied to the power grid G. As for the power energy, the sum of the generated energy P2 and the charge-and-discharge energy P3 is a supplied energy P1 (P1=P2+P3). Information on the supplied energy P1 is grasped (monitored) by the change unit 53 of the control device 5 to be described below.

The control device 5 controls the power converter 4, thereby controlling power supply to the power grid G. The control device 5 includes a storage unit 50, a generator 51, and a controller 52, and the change unit 53.

The storage unit 50 stores information that is used by the control device 5. A control program 500 is exemplified as information that is stored in the storage unit 50. The control program 500 is a program for causing a computer to function as the control device 5.

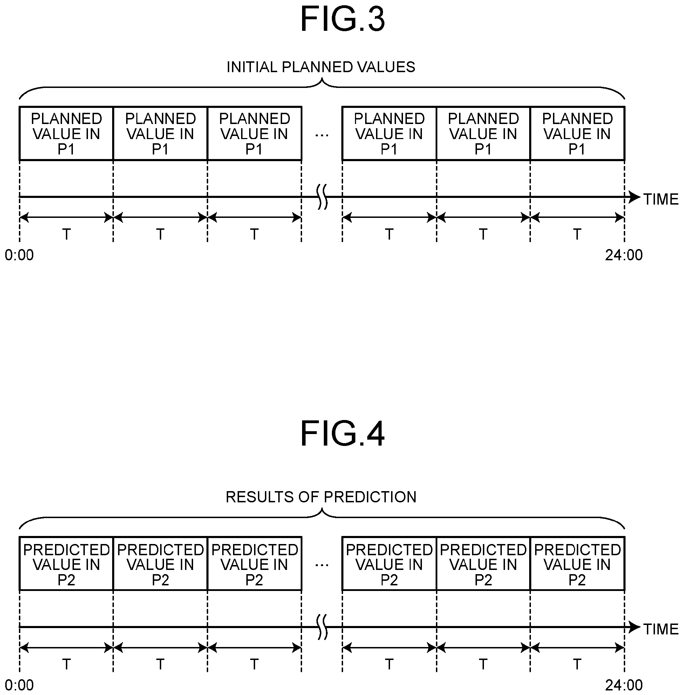

The generator 51 generates a planned value of the supplied energy P1. A planned value that is generated by the generator 51 is also referred to as an initial planned value. A description will be given also with reference to FIG. 3.

FIG. 3 is a diagram illustrating an example of the initial planned values. The initial planned values are planned values of the supplied energy P1 in a future day that is a subject of the planned value. The day that is the subject of the planned values is also referred to as a plan subject day.

The plan subject day contains a plurality of time slots T that are obtained by dividing the day. The time slot T has a given period (unit period) and is also referred to as a frame, or the like. The length of the time slot T is 30 minutes and, in that case, 0:00 to 24:00 of the plan subject day is divided into 48 time slots T. The initial planned values contain planned values of the supplied energy P1 to the power grid G in the respective time slots T.

Back to FIG. 1, the generator 51 generates initial planned values like above-described ones based on results of prediction of power generation by the power generator 2. In the example illustrate in FIG. 1, the prediction server 6 predicts power generation by the power generator in the plan subject day and transmits the results of prediction to the control device 5. For example, based on weather information (such as wind power, an amount of solar radiation, a temperature) on a site where the power generator 2 is set, generated power of the power generator 2 or predicted values of the generated energy P2 are calculated. For calculation, various types of algorithms may be used or a trained model may be used. The prediction results will be described with reference to FIG. 4.

FIG. 4 is a diagram illustrating an example of the prediction results. In this example, the prediction results contain respective predicted values of the generated energy P2 of the power generator 2 in a plurality of time slots T of the plan subject day. The respective time slots T correspond to the respective time slots T in FIG. 2.

Back to FIG. 1, for example, prediction results like that described above are transmitted from the prediction server 6 to the control device 5. Based on the predicted results from the prediction server 6, the generator 51 generates initial planned values. Specifically, the generator 51 generates predicted values of the generated energy P2 of the power generator 2 in the respective time slots T as planned values of the supplied energy P1 in the respective time slots T. For example, the planned values of the supplied energy P1 in the respective time slots T in FIG. 3 described above are the same as the predicted values of the generated energy P2 in the corresponding time slots T in FIG. 4.

The generator 51 provides the generated initial planned values to the power transmission and distribution operator that manages the power grid G. In the example illustrated in FIG. 1, the provision is performed by transmitting the initial planned values to the command system 7. The generator 51 provides the initial values by the day before the plan subject day, more specifically, by a deadline time. An example of the deadline time is 12:00 of the plan subject day.

The provided planned value, that is, each of the planned values in the time slots T, is determined a given time (for example, one hour) before the time at which the time slot T starts. The determination is also referred to as a gate close, or the like. In the following description, a time at which a planned value is determined is also referred to as a gate close time.

Note that it is possible to make a change (also referred to as a correction) until the gate close time. The change unit 53 changes the planned values and a detail thereof will be described below.

The command system 7 is a system that the power transmission and distribution operator uses and is also referred to as a load dispatching center system, or the like. For example, the command system 7 has various types of functions enabling management of and control on the power grid G by the power transmission and distribution operator. The command system 7 and the power transmission and distribution operator may be replaced with each other as long as there is no inconsistency.

The command system 7 promotes the preparation of control on the power grid G to maintain the power demand and supply balance of the power grid G based on the submitted initial planned values or the changed planned values. For example, it is assumed that, in a time slot T of which planned value is determined after it runs over the gate close time (the time slot T after determination of the planned value), the supplied energy P1 according to the planned value is supplied from the control system 1 to the power grid G, preparation for control on the power grid G is promoted. Along with that, even if the actual value of the supplied energy P1 deviates from the planned value and an imbalance would occur, the preparation of control on the power grid G is promoted such that the power demand and supply balance of the power grid G is maintained.

Back to the description of the control device 5, the controller 52 controls power supply to the power grid G. Specifically, the controller 52 controls the power converter 4 such that the actual value of the supplied energy P1 to the power grid G is close to the planned value in the time slot T after determination of the planned value. As described above, the power supply is power supply using the generated power of the power generator 2 and charge-and-discharge power of the electric storage system 3.

For example, the controller 52 transmits an indicated value representing the magnitude of power that the power converter 4 outputs to the power grid G to the power converter 4. The indicated value may be a value obtained by converting the planned value of the supplied energy P1 into power. The power converter 4 supplies power to the power grid G according to the indicated value.

As described above, the planned value of the supplied energy P1 is equal to the predicted value of the generated energy P2. Thus, when the actual value of the generated energy P2 in the time slot T is equal to the predicted value of the power generator 2, all the generated energy P2 is supplied as the supplied energy P1 to the power grid G. The charge-and-discharge energy P3 of the electric storage system 3 becomes zero.

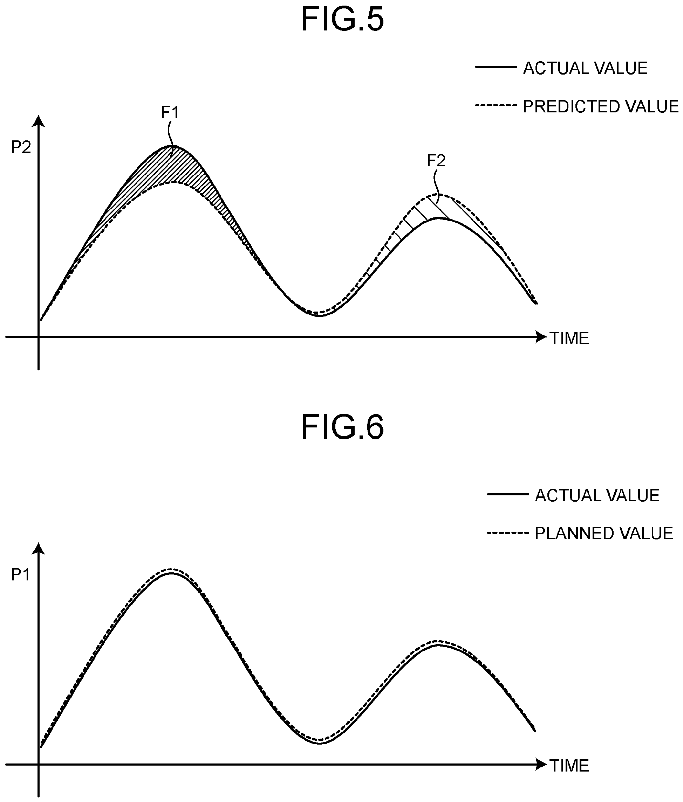

The generated energy P2 of the power generator 2 using natural energy however often varies (deviates) from the predicted value. The variation is absorbed by the electric storage system 3. A description will be given with reference to FIGS. 5 and 6.

FIGS 5 and 6 are diagrams illustrating an example of the variation in the generated energy P2 by the electric storage system 3. The broken line in the graph in FIG. 5 represents the predicted value of the generated energy P2. The solid line in the graph represents the actual value of the generated energy P2. The broken line in the graph in FIG. 6 represents the planned value of the supplied energy P1. The solid line in the graph represents the actual value of the supplied energy P1.

As illustrated in FIG. 5, there is a time slot in which the actual value of the generated energy P2 is different from the predicted value. In a time slot in which the generated power P2 varies such that the actual value is larger than the predicted value, the electric storage system 3 is charged with the energy corresponding to the value of variation (illustrated as an area F1). On the contrary, in a time slot in which the generated power P2 varies such that the actual value is smaller than the predicted value, the energy corresponding to the value of the variation (illustrated as an area F2) is discharged from the electric storage system 3. As a result, as illustrated in FIG. 6, the actual value of the supplied energy P1 is made close to the planned value. Note that making the actual value close to the planned value may be understood as a meaning including making the actual value agree with the planned value.

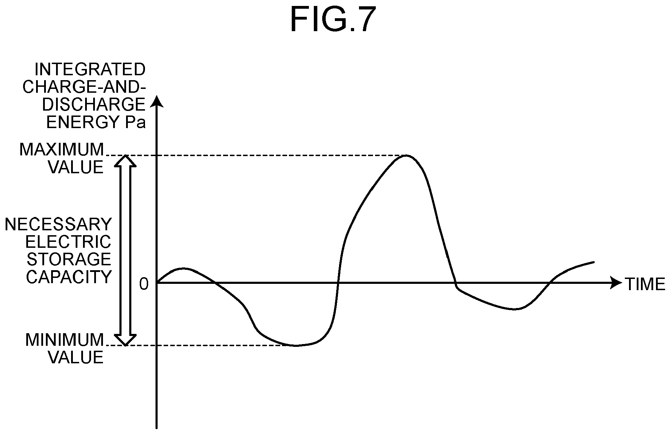

Back to FIG. 1, for example, absorbing the value of the variation from the predicted value of the generated energy P2 of the power generator 2 as the charge-and-discharge energy P3 of the electric storage system 3 enables the actual value of the supplied energy P1 to the power grid G to be close to the planned value. In this case, however, there is a problem that the integrated value of the charge-and-discharge energy P3 of the electric storage system 3 can increase. When the change in the integrated value increases, the necessary electric storage capacity of the electric storage system 3 increases. A description will be given also with reference to FIG. 7. Note that the integrated value of the charge-and-discharge energy P3 of the electric storage system 3 is also referred to as an integrated charge-and-discharge energy Pa.

FIG. 7 is a diagram illustrating an example of a relationship between the integrated charge-and-discharge energy Pa of the electric storage system 3 and the necessary electric storage capacity. The horizontal axis of the graph represents the time. The vertical axis of the graph represents the integrated charge-and-discharge energy Pa. As the time passes, the integrated charge-and-discharge energy Pa changes in accordance with the charge and discharge by the electric storage system 3.

The electric energy corresponding to the difference between a maximum value and a minimum value of the integrated charge-and-discharge energy Pa serves as the necessary electric storage capacity. Particularly when the charge and discharge by the electric storage system 3 inclines to charge or inclines to discharge, a change in the integrated charge-and-discharge energy Pa increases. The larger the change in the integrated charge-and-discharge energy Pa is, the more the difference between the maximum value and the minimum value increases, and accordingly the electric storage capacity increases.

Reducing the change in the integrated charge-and-discharge energy Pa enables a reduction in the electric storage capacity. Thus, the planned value is changed as described below.

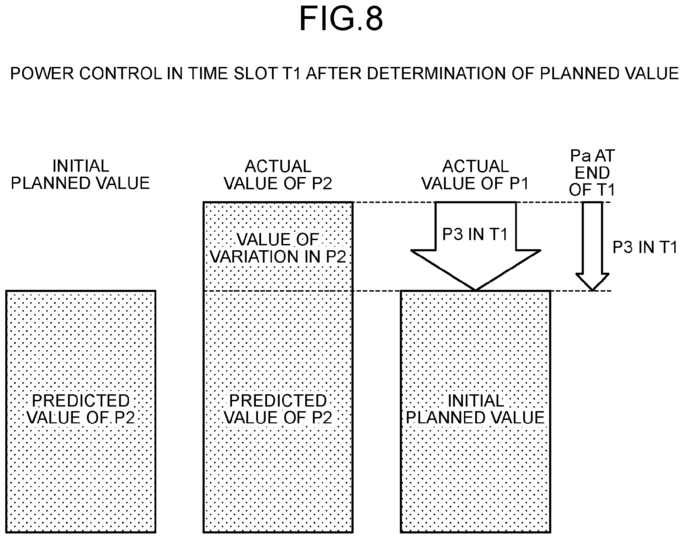

Back to FIG. 1, the change unit 53 changes the planned value in the time slot T before determination of the planned value to make the integrated charge-and-discharge energy Pa of the electric storage system 3 close to zero. A description will be given also with reference to FIGS. 8 to 10.

FIGS. 8 to 10 are diagrams illustrating an example of a change of a planned value and power control in a time T. Note that, for easy understanding, two different time slots T in the same plane subject day will be also referred to as a time slot T1 and a time slot T2. The time slot T2 is a time slot after the time slot T1. Assume that the integrated charge-and-discharge energy Pa of the electric storage system 3 at the start of the time slot T1 is zero.

FIG. 8 illustrates power control in the time slot T1 after determination of a planned value. As described above, the initial planned value is the same as the predicted value of the generated energy P2 of the power generator 2 in the time slot T1.

Practically, the generated energy P2 of the power generator 2 varies from the predicted value. The sum of the predicted value of the generated energy P2 and the value of variation serves as the actual value of the generated energy P2.

The value of variation in the generated energy P2 is absorbed as the charge-and-discharge energy P3 of the electric storage system 3. As a result, the actual value of the supplied energy P1 serves as the initial planned value.

The integrated charge-and-discharge energy Pa of the electric storage system 3 changes by the charge-and-discharge energy P3 of the electric storage system 3 in the time slot T1. In the example, the integrated charge-and-discharge energy Pa at the start of the time slot T1 is zero, the integrated charge-and-discharge energy Pa at the end of the time slot T1 serves as the charge-and-discharge energy P3 (Pa=P3).

The change unit 53 changes the planned value in the time slot T2 before determination of the planned value to make the integrated charge-and-discharge energy Pa of the electric storage system 3 close to zero.

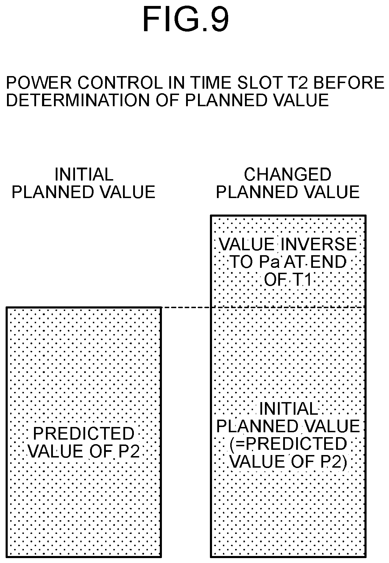

FIG. 9 illustrates a change of the planned value in a time T2 before determination of the planned value. The initial planned value is the predicated value of the generated energy P2 of the power generator 2. The planned value in the time slot T2 is changed from the initial planned value. The change is made such that the change of the integrated charge-and-discharge energy Pa that occurs in the previous time slot T1. Specifically, the change unit 53 adds a value inverse to the integrated charge-and-discharge energy Pa at the end of the previous time slot T1, that is, a value obtained by inversing the symbol of the value of the integrated charge-and-discharge energy Pa, to the planned value in the time slot T2.

The change unit 53 submits the changed planned value (transmits the value to the command system 7). The change unit 53 submits the changed planned value in the time slot T2 in the plan subject day, more specifically, by the gate close time of the time slot T2. Thereafter, the gate close time comes and the planned value in the time slot T2 is determined.

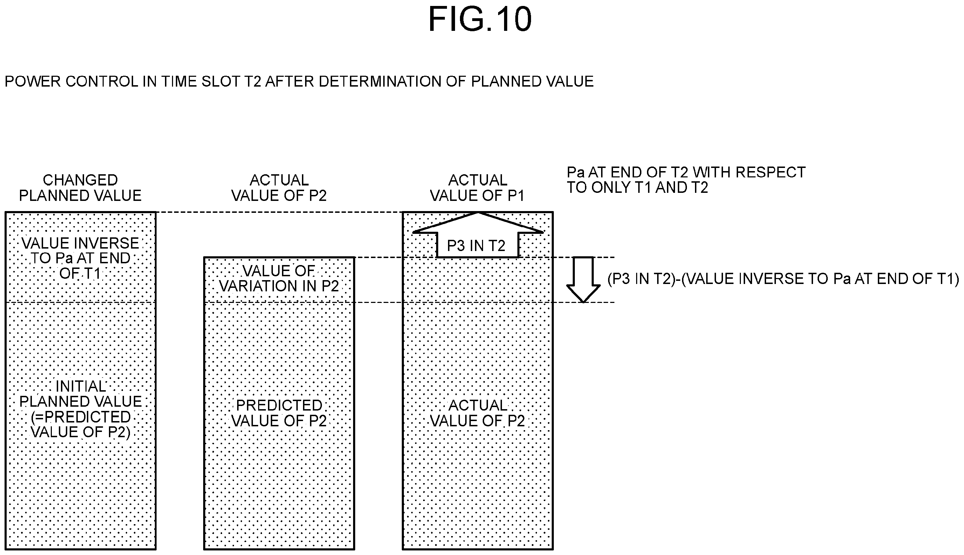

FIG. 10 illustrates power control in the time slot T2 after determination of the planned value. As described above, the changed planned value is the value obtained by adding the value inverse to the charge-and-discharge energy P3 in the time slot T1 to the initial planned value (=the predicted value of the generated energy P2).

In the time slot T2 after determination of the planned value, the controller 52 controls the power converter 4 such that the actual value of the supplied energy P1 to the power grid G is made close to the changed planned value.

If the actual value of the generated energy P2 of the power generator 2 is equal to the planned value, in the time slot T2, the electric storage system 3 charges and discharges the electric energy of the value inverse to the charge-and-discharge energy P3 in the previous time slot T1. The charge-and-discharge energy P3 of the electric storage system 3 in the time slot T2 is a value inverse to the integrated charge-and-discharge energy Pa at the end of the time slot T1. As a result, the integrated charge-and-discharge energy Pa at the end of the time slot T2 only with respect to the previous time slot T1 and the time slot T2 (in the case where a calculation is made only with respect to these time slots) is zero. Adding the value inverse to the integrated charge-and-discharge energy Pa at the end of the previous time slot T1 to the planned value in the subsequent time slot T2 as described above makes it possible to make the integrated charge-and-discharge energy Pa of the electric storage system 3 close to zero.

Note that, as described in FIG. 10, the predicted value of the generated energy P2 of the power generator 2 keeps varying from the predicted value also in the time slot T2. The value of the variation is absorbed as the charge-and-discharge energy P3 of the electric storage system 3. The actual value of the supplied energy P1 serves as the initial planned value.

The integrated charge-and-discharge energy Pa changes by the charge-and-discharge energy P3 of the electric storage system 3. The integrated charge-and-discharge energy Pa at the end of the generated energy P2 only with respect to the previous time slot T1 and the time slot T2 is a value obtained by subtracting the value inverse to the integrated charge-and-discharge energy Pa at the end of the time slot T1 from the charge-and-discharge energy P3 in the time slot T2.

The value inverse to the integrated charge-and-discharge energy Pa at the end of the time slot T2 is further added to the initial planned value in a time slot T before determination of a further subsequent planned value. A value inverse to an integrated charge-and-discharge energy Pa at the end of a time slot T is added to a planned value in a subsequent time slot T and accordingly the planned value is changed as described above, so that the actual value of the supplied energy P1 can be made close to the planned value and the integrated charge-and-discharge energy Pa of the electric storage system 3 can be made close to zero. In other words, it is possible to reduce the electric storage capacity while inhibiting an imbalance. For example, the electric storage capacity can be reduced to one-fifth (by 80%) of the electric storage capacity in the case where power is kept supplied for a plurality of days without making such a change as described above.

In the embodiment, the above-described time slot T2 may be the earliest time slot from the end of the time slot T1 among time slots in which planned values are not determined at the end of the time slot T1. Accordingly, it is possible to cancel the change of the integrated charge-and-discharge energy Pa that occurs in the time slot T1. It is possible to further increase the effect of reducing the electric storage capacity by reducing the change of the integrated charge-and-discharge energy Pa.

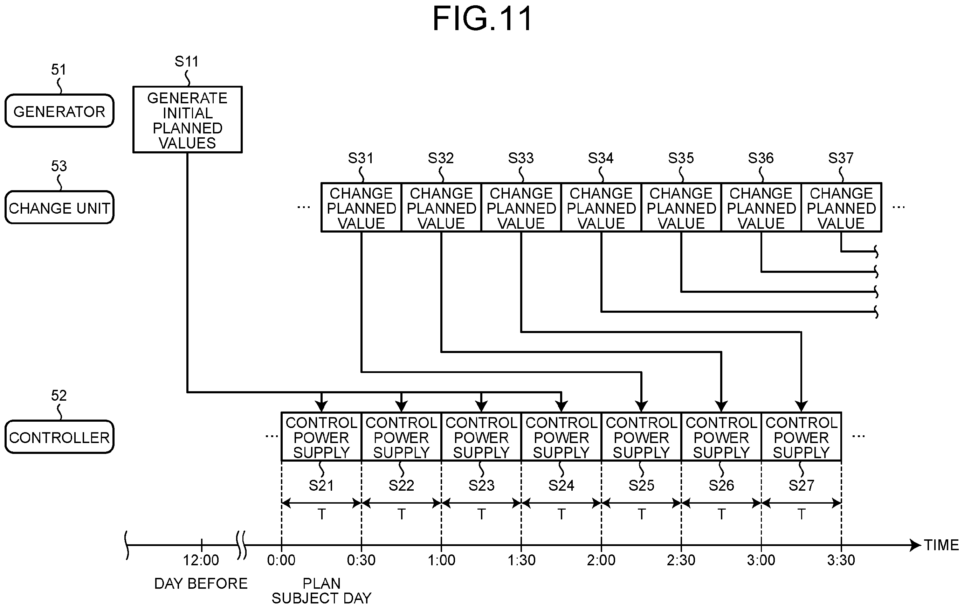

FIG. 11 is a diagram illustrating an example of a process (control method) that is executed in the control system 1. Some sets of processing executed on a day before a plane subject day and on the plan subject day are denoted with reference numerals and are presented. The processing at step S11 is executed by the generator 51 the day before. The processing at steps S21 to S27 is executed on the plan subject day. The processing at steps S31 to step S37 is executed by the change unit 53 on the plan subject day. A description of the content overlapping that described above will be omitted as appropriate.

At step S11, initial planned values are generated. The generator 51 generates an initial value of the supplied energy P1 to the power grid G in each of a plurality of time slots T of the plan subject day. The generator 51 submits the generated initial planned values (transmits the initial planned values to the command system 7). In the example, the initial planned values are generated and are submitted by 12 o'clock of the day before the plane subject day.

At step S21, power supply is controlled based on the initial planned values. The planned value in the time slot T (0:00 to 0:30) is determined at the initial planned value. The controller 52 of the control device 5 controls the power converter 4 such that the actual value of the supplied energy P1 to the power grid G is made close to the initial planned value. The value of variation in the generated energy P2 of the power generator 2 is absorbed as the charge-and-discharge energy P3 of the electric storage system 3. The integrated charge-and-discharge energy Pa of the electric storage system 3 changes accordingly.

At step S31, the planned value is changed. The change unit 53 of the control device 5 adds a value inverse to the integrated charge-and-discharge energy Pa at the end of the time slot T (0:30) at previous step S21 to the initial planned value in a time slot T (2:00 to 2:30 in this example) before determination of the planned value and thus changes the planned value. The changed planned value is transmitted (submitted) to the command system 7. A change or submission of a planned value is made by a gate close time (1:00 in this example) of a time slot T on which a change to be made.

The same processing as that of step S21 and step S31 described above is executed at steps S22 to S24 and steps S32 to S34.

At step S22, in the time slot T (0:30 to 1:00), power supply is controlled based on the initial planned value. At step S32, a value inverse to the integrated charge-and-discharge energy Pa at the end (1:00) of the time slot T at step S22 is added to the initial planned value in a time slot T (2:30 to 3:00) before determination of the planned value and the planned value is changed accordingly.

At step S23, in a time slot T (1:00 to 1:30), power supply is controlled based on the initial planned value. At step S33, a value inverse to the integrated charge-and-discharge energy Pa at the end (1:30) of the time slot T at step S23 is added to the initial planned value in a time slot T (3:00 to 3:30) before determination of the planned value and the planned value is changed accordingly.

At step S24, in a time slot T (1:30 to 2:00), power supply is controlled based on the initial planned value. At step S34, a value inverse to the integrated charge-and-discharge energy Pa at the end (2:00) of the time slot T at step S24 is added to the initial planned value in a time slot T (3:30 to 4:00) before determination of the planned value and the planned value is changed accordingly.

At step S25, power supply is controlled based on the planned value. The controller 52 controls the power converter 4 such that the actual value of the supplied energy P1 to the power grid G is made close to the changed planned value. Note that the value of variation in the generated energy P2 in the power generator 2 is absorbed in the (further) charge-and-discharge energy P3 of the electric storage system 3.

The time slot T (0:00 to 0:30) at previous step S21 is set for the time slot T1 and the time slot T (2:00 to 2:30) at step S25 is set for the time slot T2. As described with reference to FIG. 9 above, the integrated charge-and-discharge energy Pa at the end of the time slot T2 with respect to only the time slot T1 and the time slot T2 is a value obtained by subtracting a value inverse to the integrated charge-and-discharge energy Pa at the end of the time slot T1 from the charge-and-discharge energy P3 in the time slot T2. Accordingly, the integrated charge-and-discharge energy Pa of the charge-and-discharge energy P3 is made close to zero.

At step S35, the planned value is changed. The change unit 53 of the control device 5 adds a value inverse to the integrated charge-and-discharge energy Pa at the end of the time slot T (2:30) at previous step S25 to the initial planned value in a time slot T (for example, 4:00 to 4:30) before determination of the planned value and thus changes the planned value. The changed planned value is transmitted (submitted) to the command system 7.

The same processing as that of step S25 and step S35 described above is executed at steps S26 and S27 and steps S36 and S37.

At step S26, in the time slot T (2:30 to 3:00), power control based on the changed planned value is performed. At step S36, a value inverse to the integrated charge-and-discharge energy Pa at the end (3:00) of the time slot T at step S26 is added to the initial planned value in a time slot T (4:30 to 5:00) before determination of the planned value and the planned value is changed accordingly.

At step S27, in the time slot T (3:00 to 3:30), power control based on the changed planned value is performed. At step S37, a value inverse to the integrated charge-and-discharge energy Pa at the end (3:30) of the time slot T at step S27 is added to the initial planned value in a time slot T (5:00 to 5:30) before determination of the planned value and the planned value is changed accordingly.

Repeating the above-described processing repeatedly makes it possible to make the actual value of the supplied energy P1 close to the planned value and make the integrated charge-and-discharge energy Pa of the electric storage system 3 close to zero. In other words, it is possible to reduce the electric storage capacity while inhibiting an imbalance.

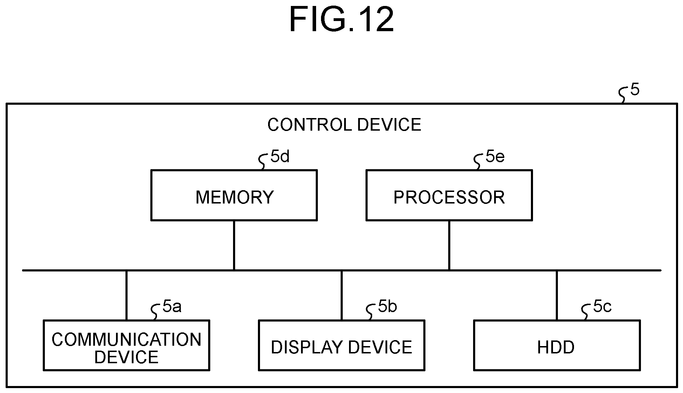

FIG. 12 is a diagram illustrating a hardware configuration of a device. A computer having the exemplified hardware configuration, or the like, functions as the control device 5 described above. The control device 5 includes a communication device 5a, a display device 5b, a hard disk drive (HDD) 5c, a memory 5d, and a processor 5e that are mutually connected via a bus, or the like.

The communication device 5a is a network interface card, or the like, and enables communication with other devices. The display device 5b is, for example, a touch panel, a display device, or the like. The HDD 5c functions as the storage unit 50 and, for example, stores the control program 500.

The processor 5e reads the control program 500 from the HDD 5c, or the like, and loads the control program 500 into the memory 5d, thereby causing a computer to function as the control device 5. The functions serving as the control device 5 include the function of the generator 51, the function of the controller 52, and the function of the change unit 53 that are described above.

The control program 500 can be distributed via a network, such as the Internet. The control program 500 is recorded in a computer-readable recording medium, such as a hard disk, a flexible disk (FD), a CD-ROM, a magneto-optical disk (MO), or a digital versatile disc (DVD), and is executable by being read by a computer from the recording medium.

The disclosed technique is not limited to the embodiment. For example, as for the above-described embodiment, the example in which a prediction on power generation by the power generator 2 is made by the prediction server 6 is exemplified and described. Note that the function of the prediction server 6 may be incorporated in the control device 5. The power generator 2 is not limited to a wind power generator and a solar power generator. Various apparatuses that generate power using natural energy may be used as the power generator 2.

The techniques described above, for example, are specified as follows. One of the disclosed techniques is a control method. As described with reference to FIGS. 1 to 4 and FIGS. 8 to 11, the control method includes generating an initial planned value of a supplied energy P1 to the power grid G in each of a plurality of time slots T (step S 11); controlling power supply to the power grid G using generated power of the power generator 2 and charge-and-discharge power of the electric storage system 3 such that an actual value of the supplied energy P1 to the power grid G is made close to a planned value in a time slot T after determination of the planned value (steps S21 to S27); and changing the planned value in the time slot T before determination of the planned value such that an integrated charge-and-discharge energy Pa of the electric storage system 3 is made close to zero (steps S31 to S37), wherein the controlling (steps S21 to S27) includes controlling the power supply to the power grid G such that the actual value of the supplied energy P1 is made close to the changed planned value (steps S25 to step S27).

According to the control method, it is possible not only make the actual value of the supplied energy P1 to the power grid G close to the planned value but also make the integrated charge-and-discharge energy Pa of the electric storage system 3 close to zero. The change of the integrated charge-and-discharge energy Pa is inhibited and accordingly the electric storage capacity of the electric storage system 3 reduces. Accordingly, it is possible to reduce the electric storage capacity while inhibiting an imbalance.

As described with reference to FIGS. 8 to 11, changing the planned value (steps S31 to S37) may include adding a value inverse to the charge-and-discharge energy P3 of the electric storage system 3 at the end of the time slot T (for example, the time slot T1) after determination of the planned value to the planned value in the time slot T (for example, the time slot T2) before determination of the planned value. For example, canceling the change of the integrated charge-and-discharge energy Pa that occurs in the time previous slot T as described above in the subsequent time slot T makes it possible to make the integrated charge-and-discharge energy Pa of the electric storage system 3 close to zero.

As described with reference to FIGS. 8 to 11, changing the planned value (steps S31 to S37) may include changing the planned value in the earliest time slot T before determination of the planned value from the end of the time slot T after determination of the planned value. Accordingly, it is possible to cancel the change of the integrated charge-and-discharge energy Pa that occurs in the previous time slot T. It is possible to further increase the effect of reducing the electric storage capacity by reducing the change of the integrated charge-and-discharge energy Pa.

As described with reference to FIGS. 1, 3 and 11, the time slots T are a plurality of time slots T obtained by dividing a plan subject day, generating the initial planned value (step S11) includes submitting the initial planned value to a power transmission and distribution operator (for example, transmitting the initial planned value to the command system 7) that manages the power grid G by a day before the plan subject day, and changing the planned value (steps S31 to S37) includes submitting the changed planned value to the power transmission and distribution operator (for example, transmitting the changed planned value to the command system 7) on the plan subject day. Accordingly, when power supply to the power grid G that the power transmission and distribution operator manages performed, it is possible to reduce the electric storage capacity while inhibit an imbalance.

As described with reference to FIGS. 1 to 5 and FIGS. 8 to 11, power generation by the power generator 2 includes power generation using natural energy, generating the initial planned value (step S11) includes generating a predicted value of the generated energy P2 of the power generator2 as the initial planned value, and the controlling (steps S21 to S27) includes absorbing a value of variation from the predicted value of the generated energy P2 of the power generator 2 using the charge-and-discharge energy P3 of the electric storage system 3. For example, it is possible to control power supply to the power grid G using the generated power of the power generator 2 and the charge-and-discharge energy of the electric storage system 3 as described above.

The control system 1 described with reference to FIGS. 1 to 4 and FIGS. 8 to 11 is also one of the disclosed techniques. The control system 1 includes the generator 51 that generates an initial planned value of a supplied energy P1 to the power grid G in each of a plurality of time slots T; the controller 52 that controls power supply to the power grid G using generated power of the power generator 2 and charge-and-discharge power of the electric storage system 3 such that an actual value of the supplied energy P1 to the power grid G is made close to a planned value in the time slot T after determination of the planned value; and the change unit 53 that changes the planned value in the time slot T before determination of the planned value such that an integrated charge-and-discharge energy Pa of the electric storage system 3 is made close to zero, wherein the controlling by controller 52 includes controlling the power supply to the power grid G such that the actual value of the supplied energy P1 is made close to the changed planned value. The control system 1 also makes it possible to reduce the electric storage capacity while inhibiting an imbalance.

The control program 500 described with reference to FIGS. 1 to 4 and FIGS. 8 to 12 is also one of the disclosed techniques. The control program 500 includes a process including generating an initial planned value of a supplied energy P1 to the power grid G in each of a plurality of time slots T; controlling power supply to the power grid G using generated power of the power generator 2 and charge-and-discharge power of the electric storage system 3 such that an actual value of the supplied energy P1 to the power grid G is made close to a planned value in the time slot T after determination of the planned value; and changing the planned value in the time slot T before determination of the planned value such that an integrated charge-and-discharge energy Pa of the electric storage system 3 is made close to zero, wherein the controlling by controller 52 includes controlling the power supply to the power grid G such that the actual value of the supplied energy P 1 is made close to the changed planned value. The control program 500 also makes it possible to reduce the electric storage capacity while inhibiting an imbalance.

Some examples of combinations of the disclosed technical features will be described below.
(1).A control method comprising:
   generating an initial planned value of a supplied energy to a power grid in each of a plurality of time slots;
   controlling power supply to the power grid using generated power of a power generator and charge-and-discharge power of an electric storage system such that an actual value of the supplied energy to the power grid is made close to a planned value in a time slot after determination of the planned value; and
   changing the planned value in the time slot before determination of the planned value such that an integrated charge-and-discharge energy of the electric storage system is made close to zero,
   wherein the controlling includes controlling the power supply to the power grid such that the actual value of the supplied energy is made close to the changed planned value.
(2) The control method according to (1), wherein the changing the planned value includes adding a value inverse to a charge-and-discharge energy of the electric storage system at the end of the time slot after determination of the planned value to the planned value in the time slot before determination of the planned value.
(3) The control method according to (1) or (2), wherein changing the planned value includes changing the planned value in the earliest time slot before determination of the planned value from the end of the time slot after determination of the planned value.
(4) The control method according to any one of (1) to (3), wherein the time slots are a plurality of time slots obtained by dividing a plan subject day,
   generating the initial planned value includes submitting the initial planned value to a power transmission and distribution operator that manages the power grid by a day before the plan subject day, and
   changing the planned value includes submitting the changed planned value to the power transmission and distribution operator on the plan subject day.
(5) The control method according to any one of (1) to (4), wherein power generation by the power generator includes power generation using natural energy,
   generating the initial planned value includes generating a predicted value of the generated energy of the power generator as the initial planned value, and
   the controlling includes absorbing a value of variation from the predicted value of the generated energy of the power generator using the charge-and-discharge energy of the electric storage system.
(6) A control system comprising:
   a generator that generates an initial planned value of a supplied energy to a power grid in each of a plurality of time slots;
   a controller that controls power supply to the power grid using generated power of a power generator and charge-and-discharge power of an electric storage system such that an actual value of the supplied energy to the power grid is made close to a planned value in a time slot after determination of the planned value; and
   a change unit that changes the planned value in the time slot before determination of the planned value such that an integrated charge-and-discharge energy of the electric storage system is made close to zero,
   wherein the controlling by controller includes controlling the power supply to the power grid such that the actual value of the supplied energy is made close to the changed planned value.
(7) A computer-readable recording medium on which a control program is recorded, the program causing a computer to execute a process comprising:
   generating an initial planned value of a supplied power energy to a power grid in each of a plurality of time slots;
   controlling power supply to the power grid using generated power of a power generator and charge-and-discharge power of an electric storage system such that an actual value of the supplied energy to the power grid is made close to a planned value in a time slot after determination of the planned value; and
   changing the planned value in the time slot before determination of the planned value such that an integrated charge-and-discharge energy of the electric storage system is made close to zero,
   wherein the controlling includes controlling the power supply to the power grid such that the actual value of the supplied energy is made close to the changed planned value.

## Claims

1. A control method comprising:
generating an initial planned value of a supplied energy (P1) to a power grid (G) in each of a plurality of time slots (T);
controlling power supply to the power grid (G) using generated power of a power generator (2) and charge-and-discharge power of an electric storage system (3) such that an actual value of the supplied energy (P1) to the power grid (G) is made close to a planned value in a time slot (T) after determination of the planned value; and
changing the planned value in the time slot (T) before determination of the planned value such that an integrated charge-and-discharge energy (Pa) of the electric storage system (3) is made close to zero,
wherein the controlling includes controlling the power supply to the power grid (G) such that the actual value of the supplied energy (P1) is made close to the changed planned value.

2. The control method according to claim 1, wherein the changing the planned value includes adding a value inverse to a charge-and-discharge energy (P3) of the electric storage system (3) at the end of the time slot (T) after determination of the planned value to the planned value in the time slot (T) before determination of the planned value.

3. The control method according to claim 1 or 2, wherein changing the planned value includes changing the planned value in the earliest time slot (T) before determination of the planned value from the end of the time slot (T) after determination of the planned value.

4. The control method according to any one of claims 1 to 3, wherein the time slots (T) are a plurality of time slots (T) obtained by dividing a plan subject day,
generating the initial planned value includes submitting the initial planned value to a power transmission and distribution operator that manages the power grid (G) by a day before the plan subject day, and
changing the planned value includes submitting the changed planned value to the power transmission and distribution operator on the plan subject day.

5. The control method according to any one of claims 1 to 4, wherein power generation by the power generator (2) includes power generation using natural energy,
generating the initial planned value includes generating a predicted value of the generated energy (P2) of the power generator (2) as the initial planned value, and
the controlling includes absorbing a value of variation from the predicted value of the generated energy (P2) of the power generator (2) using the charge-and-discharge energy (P3) of the electric storage system (3).

6. A control system (1) comprising:
a generator (51) that generates an initial planned value of a supplied energy (P1) to a power grid (G) in each of a plurality of time slots (T);
a controller (52) that controls power supply to the power grid (G) using generated power of a power generator (2) and charge-and-discharge power of an electric storage system (3) such that an actual value of the supplied energy (P1) to the power grid (G) is made close to a planned value in a time slot (T) after determination of the planned value; and
a change unit (53) that changes the planned value in the time slot (T) before determination of the planned value such that an integrated charge-and-discharge energy (Pa) of the electric storage system (3) is made close to zero,
wherein the controlling by controller (52) includes controlling the power supply to the power grid (G) such that the actual value of the supplied energy (P1) is made close to the changed planned value.

7. A control program (500) that causes a computer to execute a process comprising:
generating an initial planned value of a supplied power energy (P1) to a power grid (G) in each of a plurality of time slots (T);
controlling power supply to the power grid (G) using generated power of a power generator (2) and charge-and-discharge power of an electric storage system (3) such that an actual value of the supplied energy (P1) to the power grid (G) is made close to a planned value in a time slot (T) after determination of the planned value; and
changing the planned value in the time slot (T) before determination of the planned value such that an integrated charge-and-discharge energy (Pa) of the electric storage system (3) is made close to zero,
wherein the controlling includes controlling the power supply to the power grid (G) such that the actual value of the supplied energy (P 1) is made close to the changed planned value.
